(19)

Europäisches
Patentamt

European
Patent Office

Office européen
des brevets

(11) **EP 4 708 173 A1**

(12) **EUROPEAN PATENT APPLICATION**

(43) Date of publication:
**11.03.2026 Bulletin 2026/11**

(21) Application number: **24198922.7**

(22) Date of filing: **06.09.2024**

(51) International Patent Classification (IPC):
*G06Q 20/40* (2012.01)      *G06Q 20/32* (2012.01)
*G06Q 20/38* (2012.01)      *G06Q 20/20* (2012.01)
*H04W 36/14* (2009.01)      *H04W 36/16* (2009.01)
*H04W 88/06* (2009.01)

(52) Cooperative Patent Classification (CPC):
**G06Q 20/4016; G06Q 20/202; G06Q 20/325;
G06Q 20/382; H04W 12/67; H04W 36/1446;
H04W 48/18;** H04W 84/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **MasterCard International Incorporated
Purchase, NY 10577 (US)**

(72) Inventors:
• **Santos, Rudolfo Antonio Ribeiro
  2560-430 Lisbon (PT)**
• **Kaewbaidhoon, Yannaphol
  New York, 10128 (US)**

(74) Representative: **Barker Brettell LLP
100 Hagley Road
Edgbaston
Birmingham B16 8QQ (GB)**

(54) **WIFI THREAT HANDOVER TO 5G**

(57)      The present invention relates to a computer-implemented method for providing a secure network for processing payment transactions. The method comprises receiving over a Wi-Fi network 104, at a network selector server 110 associated with a payment network 108, a first transaction request message from a point of sale device 102, wherein the first transaction request message contains a request to process a transaction, determining, at the network selector server 110, a feature associated with the first transaction request message, sending a message, from the network selector server 110, based on the feature associated with the first transaction request message, to the point of sale device 102, instructing the point of sale device 102 to connect to an alternative communication network 106, wherein the alternative communication network 106 is of a different type of network than the Wi-Fi network 104, receiving over the alternative communication network 106, at the network selector server 110, a second transaction request message from the point of sale device 102, wherein the second transaction request message contains a second request to process the transaction, determining, at the network selector server 110, a feature associated with the second transaction request message, determining, at the network selector server 110, whether to proceed with the transaction over the alternative communication network 106 based on the feature associated with the second transaction request message.

Figure 2

EP 4 708 173 A1

**Description**

Field

The present disclosure generally relates to methods and systems for providing a secure network for processing payments. In particular, the method and systems allow for a network selector service associated with a payment network to determine whether a payment should be processed over an alternative 5G network instead of a Wi-Fi network, based on a risk assessment of the Wi-Fi network.

Background

Card and mobile payments are key instruments for consumers purchasing a wide range of goods. In order to perform a card or mobile payment in a store, a payment terminal, also known as a point of sale (POS) terminal or point of sale device, is often used, as an interface with the payment card, to ensure the payment is processed. A point of sale device will transmit to a payment network, such as Mastercard® or Visa®, a request to authorise a payment from a buyer's payment card, after the payment card has been presented at the point of sale device. Nowadays, many point of sale devices communicate with payment networks over a Wi-Fi network. Wi-Fi technology has become a popular choice for connecting point of sale devices with payment networks, because of its low deployment, maintenance and scaling costs, especially where access points need to serve multiple users. For instance, Wi-Fi connectivity can be a convenient choice for superstores, where multiple point of sale devices are scattered over large premises.

However, there are issues that may arise when carrying out payments over a Wi-Fi network. Critically, Wi-Fi networks are highly susceptible to eavesdropping since Wi-Fi encryption algorithms are widely known. Additionally, Wi-Fi networks broadcast their identity openly even when their network is encrypted, which increases the chances for outsiders to launch attacks against the Wi-Fi network. Another problem arises from the fact that payments will be typically transmitted through multiple Wi-Fi networks, which may increase the risk of cyber-attacks, as the hackers may attempt the data breach from multiple different points of the network. Hacked Wi-Fi networks have exposed millions of stolen payment card numbers, which are sold on the dark web and used by fraudsters to buy merchandise against the cardholder's will, causing losses for both the merchant and the card issuer.

It would therefore be desirable to have a system and a method to alleviate these problems relating to potential security issues of Wi-Fi networks.

Summary of Invention

According to an aspect of the invention there is provided a computer-implemented method for providing a secure network for processing payment transactions, the method comprising: receiving over a Wi-Fi network, at a network selector server associated with a payment network, a first transaction request message from a point of sale device, wherein the first transaction request message contains a request to process a transaction; determining, at the network selector server, a feature associated with the first transaction request message; sending a message, from the network selector server, based on the feature associated with the first transaction request message, to the point of sale device, instructing the point of sale device to connect to an alternative communication network, wherein the alternative communication network is of a different type of network than the Wi-Fi network; receiving over the alternative communication network, at the network selector server, a second transaction request message from the point of sale device, wherein the second transaction request message contains a second request to process the transaction; determining, at the network selector server, a feature associated with the second transaction request message; determining, at the network selector server, whether to proceed with the transaction over the alternative communication network based on the feature associated with the second transaction request message.

Advantageously, the present invention introduces a network selector server which conducts an assessment of a first transaction request message sent from a point of sale device. In this way, characteristics of the first transaction request message may be evaluated by the network selector server. For example the safety of the first transaction request message. The network selector server may determine whether the point of sale device should connect to a different (e.g., safer, and/or more reliable) network before a transaction contained in the first transaction request message is processed. This decision is based on a feature associated with the first transaction request message. The feature may indicate whether a transaction associated with the first transaction request message can be performed effectively and securely at the point of sale device over its current connection.

Enhanced security of the transaction may be provided by sending, from the network selector server, a message, to the point of sale device, to connect to an alternative communication network before processing the transaction. The alternative communication network is a network which is of a different type from the Wi-Fi network. Preferably, the alternative network may be a network with enhanced security mechanisms, for example a 5G network. This may provide a more secure channel (e.g., better protected from eavesdropping) over which to process the transaction.

Advantageously, an assessment of the alternative communication network is provided by determining, at the network selector server, a feature associated with the second transaction request message, which contains a second request to process the transaction. In this way, the network selector server may verify whether the transaction can be performed effectively and securely on the alternative communication network.

In some arrangements, the point of sale device may only need to connect to the alternative communication network if the network selector server determines, based on the feature associated with the first transaction request message, that the connection to the alternative communication network is desirable to process the transaction securely and effectively.

For some transactions, the network selector server may determine that it is not desirable to request the point of sale device to connect to an alternative communication network, and that said transactions can be safely and effectively processed over the (current) Wi-Fi network. In this way, a high degree of flexibility may be provided without sacrificing security standards. Another advantage may be that the alternative communication network may be less likely to be overloaded with transaction request messages, if the request to connect to an alternative communication network is evaluated on a case-by-case basis.

The method may further comprise the step of calculating, at the network selector server, a first risk score of the transaction, based on the feature of the first transaction request message. The method may further comprise the step of calculating, at the network selector server, a second risk score of the transaction, based on the feature of the second transaction request message.

In this way, a risk analysis can be conducted, at the network selector server, based on the feature associated with each of (or only one of) the transaction request messages. The first risk score and the second risk score of the transaction may be calculated through the same formula or through different formulas. The risk score may further indicate a risk or likelihood of the transaction failing, and/or a likelihood of a transaction messages failing to be effectively transmitted over the network. For example, the Wi-Fi network might be deemed likely to fail to process a transaction because of excessive network traffic.

Preferably, the step of sending the message instructing the point of sale device to connect to the alternative communication network may be based on the first risk score. In some arrangements, the step of determining, at the network selector server, whether to proceed with the transaction over the alternative communication network is based on the second risk score. In this way, the method may provide enhanced confidence in the decision-making process which leads to the point of sale connecting or not connecting to an alternative network and/or in the decision-making process which leads the network selector server to determine whether the second transaction request message should be approved or not.

Preferably, the selection of the alternative communication network may be based on the first risk score.

Basing the selection of the alternative communication network on the first risk score may enhance security of the transaction process. In some arrangements, the network selection process can be tailored to a specific first transaction request message. For example, the first risk score may be based on a feature of the transaction associated with the first transaction request message, and the network selector server may determine that, based on said feature, the transaction should be processed over a 5G network slice of a 5G network. For example, the first risk score may be based on a likelihood of eavesdropping, calculated based on eavesdropping incidents occurred for past transactions that are similar to the transaction (e.g., that occurred from a same bank account, or from a same geographical location). Therefore, if the likelihood of eavesdropping is over a predetermined threshold, the network selector server may select the alternative communication network to be a 5G network slice of a 5G network. Alternatively, if the likelihood of eavesdropping is moderate, then the network selector server may alternatively select the alternative communication network to be a 4G network.

In some arrangements, the selection of the alternative communication network is based on the feature of the first transaction request message.

The first risk score may be based on one or more of: a feature of the Wi-Fi network and a feature of the transaction. According to some arrangements, the second risk score is based on one or more of: a feature of the alternative communication network and a feature of the transaction.

Advantageously, the first risk score may be based on various features of the first transaction request message. By providing a first risk score based on a feature, such as a parameter, of the Wi-Fi network, the method allows to assess whether the Wi-Fi network is suitable to perform the transaction. Suitability may be based on the safety of the Wi-Fi network. For example, the first risk score may be a rate of eavesdropping incidents that occurred in the past over the Wi-Fi network, or a rate of eavesdropping incidents against transactions similar to the transaction, and/or a likelihood of eavesdropping based on the quality of the cybersecurity system in place to protect the Wi-Fi network. An indicator of the quality of the cybersecurity system of the Wi-Fi network may be the number of software and/or hardware updates carried out successfully to the cybersecurity system of the Wi-Fi network. In this way, the first risk score would be indicative of how well protected the Wi-Fi network is from eavesdropping.

However, the first risk score may also be indicative of the availability of the Wi-Fi network. For instance, the first risk score may be indicative of a likelihood of the transaction failing due to high network traffic. This is a useful parameter, especially when the network assessed is a public Wi-Fi network, which can be accessed by a considerable number of users at all times. Examples of network features which may be considered are the type of network, the region of the network, the number of transverse networks of the network, the number of local incidents (e.g., cyber-attacks) which have been reported for the Wi-Fi network.

By providing a first risk score based on a feature, such as a parameter, of the transaction, the method allows to assess whether the transaction should be processed. A feature of the transaction may be independent of the network over which the transaction will be processed. Examples of transaction features are: details of the sender and/or the recipient, a transaction amount, a currency, a card number, geographic location, past transactions associated with the same sender/recipient.

In some examples, the first risk score can be based on a combination of network features and transaction features. The variety and/or quantity of features may be chosen according to different purposes. A high number and variety of features may enhance the accuracy of the risk assessment conducted by the network selector server. This may be particularly appropriate for payment systems with high security needs. On the other hand, a smaller number of features analysed may be more suitable when the priority is to lower computational demands.

The method may further comprise the step of approving, at the network selector server, based on the feature associated with the second transaction request message, the second transaction request message.

The network selector server may determine that the transaction can be performed, securely and effectively, at the point of sale, when the point of sale is connected to the alternative communication network. In some arrangements, the network selector server might instruct, based on the feature of the second transaction request message, not to proceed with the transaction (i.e., a disapproval). This decision may be based on a feature of the second transaction request message. For example, the network selector server may determine that, based on the feature associated with the second transaction request, the alternative communication network is not sufficiently safe for the point of sale to connect to and to process a transaction. The network selector server may request the point of sale device to connect to another, different, network, until the point of sale is determined to have connected to a suitable network. The steps of the above aspect may therefore be iterated for a number of times. In some arrangements, the steps are iterated for a predetermined number of times and, if after n steps, the network selector server has not found a suitable network, then the transaction will be rejected.

Alternatively, the steps may be iterated for an unlimited number of times, until a suitable network is found by the network selector server.

In some arrangements, the network selector server selects the alternative communication network to which the point of sale device is instructed to connect. In this way, the network selector server can select the most suitable network, to connect the point of sale device.

In some arrangements, the network selector server may select the most suitable network amongst a plurality of networks. There may be different selection processes of the alternative communication network. For instance, the network selector server may be instructed, by the payment network provider, to select a type of network for a particular type of transaction. The selection process may vary with time.

The alternative communication network maybe a 4G network, or a 5G network or a 5G network slice of a 5G network. Advantageously, the alternative communication network can be of the type which is most suitable for processing the transaction. In some arrangements, the network type may be chosen based on safety criteria. For example, a 5G network may be selected based on its better safety mechanisms over a Wi-Fi network.

In some arrangements, a payment network provider associated with the payment network may issue an authorisation response message to an acquirer, wherein the authorisation response message comprises an authorisation to process the transaction. Advantageously, the payment network provider may issue an authorisation response message to the acquirer before or after the network selector server has determined the feature or first risk score associated with the first transaction request message received over the Wi-Fi network. In some arrangements, the assessment of the first transaction request message at the network selector server is conducted in parallel with the issuance of the authorisation response message from the payment network provider to the acquirer. In this way, efficiency can be guaranteed by conducting two verification processes in parallel, rather than in series. Preferably, the steps of the claimed method may be carried out by the network selector server in a way which is completely agnostic to the payment process carried out by the payment network. The method can therefore be adapted to work in parallel with different payment methods, and therefore be highly versatile.

In some arrangements, the method further comprises the step of sending, from the network selector server to the payment network, an approval message, based on the second risk score. The approval message may contain information such as a date and time in which the second transaction request message has been approved, and in some examples may also include the second risk score. In this way, the payment network may extract the relevant information from the approval message, and store said information for use in determining risk scores of future transaction request messages.

In some arrangements, the network selector server is part of the payment network. In this way, the payment network provider (e.g., Mastercard®) may control the network selector server through the payment network. In some instances, the network selector server may be exclusively accessible to Mastercard®. Alternatively, the network selector server may be accessible to more than one payment network provider. In some examples, the network selector server may be open-source, i.e., accessible to any payment network provider. In this way, a plurality of payment network providers may benefit from the same method for providing a secure network for processing payment transactions.

Preferably, the point of sale device connects to the alternative communication network, upon receiving the message instructing the point of sale device to connect to the alternative communication network. In some arrangements, the point of sale device may conduct checks on whether the point of sale device is able to connect to the alternative communication network. This may be desirable when, for instance, the point of sale device does not have the capability to connect to a 5G network slice of a 5G network. If the point of sale device is instructed to connect to a type of alternative communication network which is the point of sale device is unable to connect to, then, the point of sale device may request the network selector server to select a different type of alternative communication network (for instance, a 4G network). Alternatively, the point of sale device may make the determination of alternative communication network itself.

The message instructing the point of sale device to connect to the alternative communication network may further instruct the point of sale device to disconnect from the Wi-Fi network. In this way, security is enhanced because the point of sale device may not be connected to a Wi-Fi network at the point in time when the transaction is processed. The request to disconnect from the Wi-Fi network can be sent to the point of sale device before or after connecting to the alternative communication network.

According to a further aspect of the invention, there is provided a network selector server for providing a secure network for processing payment transactions, network selector server being configured to: receive over a Wi-Fi network, at a network selector server associated with a payment network, a first transaction request message from a point of sale device, wherein the first transaction request message contains a request to process a transaction; determine, at the network selector server, a feature associated with the first transaction request message; send a message, from the network selector server, based on the feature associated with the first transaction request message, to the point of sale device, instruct the point of sale device to connect to an alternative communication network, wherein the alternative communication network is of a different type of network than the Wi-Fi network; receive over the alternative communication network, at the network selector server, a second transaction request message from the point of sale device, wherein the second transaction request message contains a second request to process the transaction; determine, at the network selector server, a feature associated with the second transaction request message; determine, at the network selector server, whether to proceed with the transaction over the alternative communication network based on the feature associated with the second transaction request message.

The network selector server may be configured to perform any of the above-mentioned method steps according to the above aspect of the invention.

According to a further aspect of the invention, there is provided a non-transitory computer-readable medium comprising instructions which, when executed by a computer, cause the computer to: receive over a Wi-Fi network, at a network selector server associated with a payment network, a first transaction request message from a point of sale device, wherein the first transaction request message contains a request to process a transaction; determine, at the network selector server, a feature associated with the first transaction request message; send a message, from the network selector server, based on the feature associated with the first transaction request message, to the point of sale device, instruct the point of sale device to connect to an alternative communication network, wherein the alternative communication network is of a different type of network than the Wi-Fi network; receive over the alternative communication network, at the network selector server, a second transaction request message from the point of sale device, wherein the second transaction request message contains a second request to process the transaction; determine, at the network selector server, a feature associated with the second transaction request message; determine, at the network selector server, whether to proceed with the transaction over the alternative communication network based on the feature associated with the second transaction request message.

The non-transitory computer-readable medium may comprise instructions which, when executed by a computer, cause the computer to perform any of the above-mentioned method steps according to the above aspects of the invention.

According to a further aspect of the invention, there is provided a computer program product comprising instructions which, when executed by a computer, cause the computer to: receive over a Wi-Fi network, at a network selector server associated with a payment network, a first transaction request message from a point of sale device, wherein the first transaction request message contains a request to process a transaction; determine, at the network selector server, a feature associated with the first transaction request message; send a message, from the network selector server, based on the feature associated with the first transaction request message, to the point of sale device, instruct the point of sale device to connect to an alternative communication network, wherein the alternative communication network is of a different type of network than the Wi-Fi network; receive over the alternative communication network, at the network selector server, a second transaction request message from the point of sale device, wherein the second transaction request message contains a second request to process the transaction; determine, at the network selector server, a feature associated with the second transaction request message; determine, at the network selector server, whether to proceed with the transaction over the alternative communication network based on the feature associated with the second transaction request message.

The computer program product may comprise instructions which, when executed by a computer, cause the computer to perform any of the above-mentioned method steps according to the above aspects of the invention.

According to a further aspect of the invention, there is provided a computer-implemented method for providing a secure network for processing payment transactions, the method comprising: sending, over a Wi-Fi network, from a point of sale device, a first transaction request message to a network selector server associated with a payment network, wherein the first transaction request message contains a request to process a transaction; receiving a message, at the point of sale device, from the network selector server, based on a feature determined at the network selector server, wherein the feature is associated with the first transaction request message, the message instructing the point of sale device to connect to an alternative communication network, wherein the alternative communication network is of a different type of network than the Wi-Fi network; sending, over the alternative communication network, from the point of sale device, a second transaction request message, wherein the second transaction request message contains a second request to process the transaction; wherein the network selector server is configured to determine a feature associated with the second transaction request message, and to determine, based on the feature associated with the second transaction request message, whether to proceed with the transaction over the alternative communication network.

According to an aspect of the invention, there is provided a point of sale device for providing a secure network for processing payment transactions, the point of sale device configured to: send, over a Wi-Fi network, from a point of sale device, a first transaction request message to a network selector server associated with a payment network, wherein the first transaction request message contains a request to process a transaction; receive a message, at the point of sale device, from the network selector server, based on a feature determined at the network selector server, wherein the feature is associated with the first transaction request message, the message instructing the point of sale device to connect to an alternative communication network, wherein the alternative communication network is of a different type of network than the Wi-Fi network; send, over the alternative communication network, from the point of sale device, a second transaction request message, wherein the second transaction request message contains a second request to process the transaction; wherein the network selector server is configured to determine a feature associated with the second transaction request message, and to determine, based on the feature associated with the second transaction request message, whether to proceed with the transaction over the alternative communication network.

Description of Figures

The present invention is described below, by way of example only, with reference to the accompanying drawings, in which:

Figure 1 shows a schematic block diagram of a system, comprising a network selector server, for providing a secure network for processing payment transactions at a point of sale device;

Figure 2 shows a schematic message flow diagram of a method for processing payment transactions at a point of sale device, including a network selector server for providing a secure network for processing the payment transaction;

Figures 3 shows a schematic message flow diagram of a method following on from the message flow in Figure 2 when providing authorisation to proceed with a payment transactions at the point of sale device;

Figure 4 shows a schematic block diagram of a method for authorising, at a payment network provider, a payment transaction, providing, at a network selector server, a secure network for processing said payment transactions, and for providing, at the payment network provider, clearing and settlement of the payment transaction;

Figure 5 shows a schematic message flow diagram of a further method for processing payment transactions at a point of sale device, including a network selector server for providing a secure network for processing the payment transaction;

Figures 6 shows a schematic message flow diagram of a method showing further details of the message flow in Figure 5, when providing authorisation to proceed with a payment transaction at the point of sale device;

Figure 7 shows a flow diagram of a computer-implemented method for providing a secure network for processing payment transactions, performed by a network selector server, such as that shown in Figure 1;

Figure 8 shows a flow diagram of a computer-implemented method for providing a secure network for processing payment transactions, performed by a point of sale device such as that shown in Figure 1; and

Figure 9 shows a data processing device for executing instructions to perform any step of the methods illustrated in Figures 2 to 8.

Detailed Description

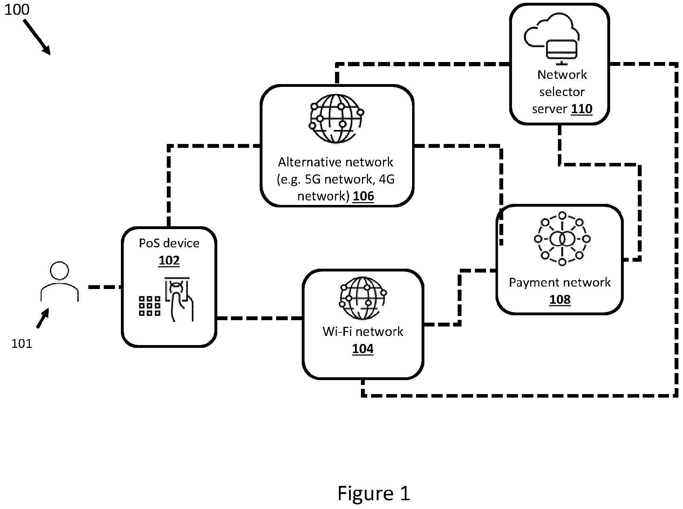

Figure 1 shows a schematic block diagram of a system 100 for processing payment transactions at a point of sale device 102. The system is capable of performing the methods as disclosed herein. The system 100 comprises a point of sale device 102. The point of sale device 102 is a device configured to process payment transactions on behalf of a user 101, such as a retail customer. The point of sale device 102 is associated with a merchant (not shown). The point of sale device 102 is connected to an acquirer, such as a bank or other financial institution, associated with the merchant. The point of sale device 102 processes payment transactions from a user 101 to a merchant, in which funds are transferred from an issuer (e.g., a bank or other financial institution) associated with the user 101, to the acquirer. The point of sale device 102 is an electronic device, configured to process electronic payment transactions.

The system 100 further comprises a Wi-Fi network 104. The Wi-Fi network 104 may be a public, or a private Wi-Fi network 104. The point of sale device 102 is configured to connect to the Wi-Fi network 104. The point of sale device 102 may be configured to process payment transactions over the Wi-Fi network 104 when connected to the Wi-Fi network 104. The Wi-Fi network 104 may have security mechanisms in place, to prevent eavesdropping from nefarious actors of messages transmitted over the Wi-Fi network 104. For example, the Wi-Fi network 104 may be password protected. However, in some instances, the Wi-Fi network 104 may not be password protected. The Wi-Fi network 104 may belong to the merchant, or may be a Wi-Fi network owned by a different entity (such as a commercially available Wi-Fi network 104 utilised by the merchant). The Wi-Fi network 104 may be a public network.

The system 100 further comprises an alternative communication network 106. The alternative communication network 106 may be a 4G network, a 5G network, a 5G network slice of a 5G network, or the like. The alternative communication network 106 is preferably safer and has better capability for performing transactions, with respect to the Wi-Fi network 104, as will be discussed in more detail below. For example, the alternative communication network 106 is preferably better protected against eavesdropping with respect to the Wi-Fi network 104.

The system 100 further comprises a network selector server 110 and a payment network 108. The network selector server 110 is associated with the payment network 108. The payment network 108 may be (but is not limited to) a Mastercard® payment network. The payment network 108 may belong to a payment network provider (not shown). The payment network provider is a third party entity which owns and provides the payment network 108 to customers. An example of payment network provider is Mastercard®. In some arrangements, the network selector server 110 may be part of the payment network 108. In this way, the payment network 108 provider has direct access and control over the network selector server 110. The payment network provider may therefore have exclusive access to the network selector server 110, meaning that the network selector server 110 does not receive messages from any other payment network provider.

Alternatively, the network selector server 110 may be separate from the payment network 108. The network selector server 110 may be a server which is independent from, but in communication with, the payment network 108. In this way, one single network selector server 110 is interfaceable with other payment networks (not shown), belonging to different payment network providers.

The Wi-Fi network 104 and the alternative communication network 106 are in communication with the payment network 108. In some arrangements, the alternative communication network 106 is part of the payment network 108. In this way, the alternative communication network 106 is a privileged communication channel to process transactions, exclusively accessible to the customers of the payment network provider. In other arrangements, the alternative communication network may be any commercially available communication network, such as a mobile telecoms provider providing, for instance 4G, 5G connectivity.

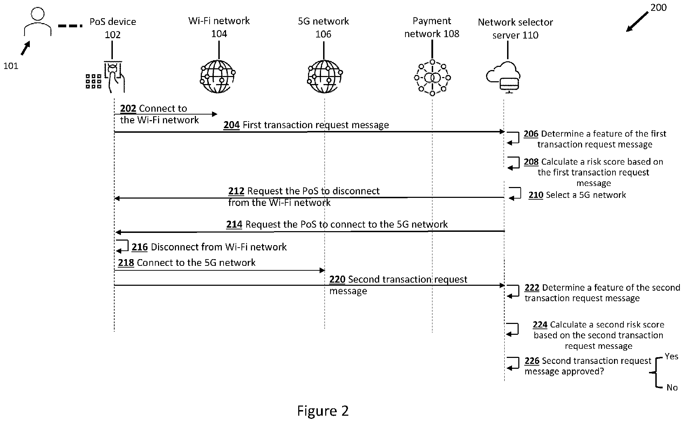

Figure 2 is a message flow diagram showing a method 200 for providing, through a network selector server 110, a secure network for processing a payment transaction at a point of sale device 102 using the system 100 as shown in Figure 1.

Initially, the point of sale device 102 connects 202 to the Wi-Fi network 104 - this may be at the time of the transaction (i.e. when the user is intending to make a payment using the point of sale device 102, or at an early point in time). The connection to the Wi-Fi network 104 is through conventional procedures known in the art that are not described here.

The point of sale device 102 then sends a first transaction request message 204 to the network selector server 110, over the Wi-Fi network 104. The first transaction request message 204 contains a request to perform a transaction at the point of sale device 102. The first transaction request message 204 may further comprise instructions to perform the transaction. The first transaction request message 204 may comprise details of a user 101 (such as a retail customer) which is requesting the transaction at the point of sale device 102. Other information which may be contained in the first transaction request message 204 may be related to any of the following: a transaction amount, a currency of the payment, bank details of a bank account associated with the user 101, bank details of a bank account associated with the merchant, and the like. The first transaction request message 204 comprises information concerning the Wi-Fi network 104, for example the type of network, or an indication of the security mechanisms in place for the Wi-Fi network 104, a report of past eavesdropping incidents occurred on the Wi-Fi network 104, or the like. In this way, the first transaction request message 204 may be used by the network selector server 110 to carry out a risk assessment of the Wi-Fi network 104 and/or the transaction associated with the first transaction request message 204.

The network selector server 110 then determines 206 a feature associated with the first transaction request message 204. The feature may be related to the Wi-Fi network 104. For example, the feature may be related to the type of Wi-Fi network 104, or be indicative of the security mechanisms for the Wi-Fi network 104, or be related to past eavesdropping incidents which occurred on the W-Fi network 104, and/or network security threats against the Wi-Fi network 104. A network security threat may be a threat of an event within a network which leads to an unauthorised and/or illegitimate action, such as an unauthorised access, altering or movement of data within the network, or an undesired access, altering or movement of data within the network. The feature may be a rate of network security threats which have been carried out successfully by nefarious actors (i.e.., entities whose aim it is to cause a network security threat) against the Wi-Fi network 104. In this way, the feature may be indicative of the safety of the Wi-Fi network 104. Alternatively, or in addition, the feature may be related to the network traffic, or the network capability for performing a transaction of the Wi-Fi network 104. In some scenarios, the Wi-Fi network 104 may be deemed sufficiently safe, but not be available because of excessive network traffic and/or because the Wi-Fi network 104 does not have the capability to perform a transaction effectively. In some scenarios, the Wi-Fi network 104 may be deemed sufficiently safe, but not have the capability to perform a transaction within a certain, desired, period of time. In some arrangements, the feature is related to the point of sale device 102. For instance, the feature may be indicative of a type of point of sale device 102 (an older model of point of sale device 102 may be considered at higher risk of cyber-attack), or indicative of the security mechanisms in place to protect the point of sale device 102. The feature of the first transaction request message may be indicative of any combination of the information described above, and be used by the network selector server 110 to determine whether the point of sale device 102 should connect to another, more suitable, network.

The feature is preferably extracted from a header of the first transaction request message. However, any suitable means may be used to determine the feature the Wi-Fi network 104. Determining the feature may comprise selecting a feature over a plurality of features. The selection of a particular feature over a plurality of features may be based on a predictive model (such as an artificial intelligence (AI) model), which has analysed historical transaction data stored by the network selector server 110 and/or the payment network 108.

Following the determination of the feature, the network selector server 110 calculates 208 a first risk score associated with the first transaction request message 204. The first risk score is based on the first transaction request message 204. The first risk score is based on the determined 206 feature. The first risk score may be based on a feature related to the Wi-Fi network 104, or on a feature related to the transaction. In some arrangements, the first risk score may further be based on other parameters.

The network selector server 110 then selects 210 an alternative communication network 106, which is a 5G network 106. The selection of the 5G network 106 is based on the first risk score.

The network selector server 110 then send a message 212 requesting the point of sale device 102 to disconnect from the Wi-Fi network 104. By disconnecting the point of sale device 102 from the Wi-Fi network 104, security may be enhanced, in case the Wi-Fi network 104 presented security risks.

The network selector server 110 then sends a message 214 requesting the point of sale device 102 to connect to the selected 5G network 106. The request is sent to the point of sale device 102 in a message 214 generated at the network selector server 110. The message 214 may further contain instructions on how to connect the point of sale device 102 to the 5G network 106. The message 214 may further contain instructions to perform the transaction over the 5G network 106. The messages 212 and 214 may occur simultaneously (such as through a single message), or sequentially (as separate messages). The messages 212 and 214 are sent over the Wi-Fi network 104, but may be sent over any network the point of sale device is currently connected to.

The point of sale device 102 then disconnects 216 from the Wi-Fi network 104, in response to the request received at step 212. The point of sale device 102 may notify the network selector server 110 that the point of sale device 102 is disconnected from the Wi-Fi network 104, after step 216.

The point of sale device 102 connects 218 to the 5G network 106. In some arrangements, the point of sale device 102 sends a notification to the network selector server 110, confirming that the point of sale device 102 has successfully connected to the 5G network 106. The connection 218 to the 5G network 106 and disconnection 216 from the Wi-Fi network 104 may be carried out simultaneously, or sequentially in any order.

The point of sale device 102 then sends a second transaction request message 220 to the network selector server 110, over the 5G network 106. The second transaction request message 220 contains a second request to process the transaction. The second transaction request message 220 further comprises instructions to perform the transaction. The second transaction request message may comprise information regarding the user 101 (such as a retail customer) which is requesting the transaction at the point of sale device 102. Other information which may be contained in the second transaction request message may be related to any of the following: a transaction amount, a currency of the payment, bank details of a bank account associated with the user 101, bank details of a bank account associated with the merchant, and the like. Preferably, the type of information with regards to the transaction are the same contained in the first transaction request message 204 (although the content of the information may be different as there is now a different network connection). The second transaction request message 220 comprises information concerning the 5G network 106, for example the type of network, or an indication of the security mechanisms in place for the 5G network 106, a report of past eavesdropping incidents occurred on the 5G network 106, or the like. In this way, the second transaction request message 220 may be used by the network selector server 110 to carry out a risk assessment of the 5G network 106 and/or the transaction associated with the second transaction request message 220.

The network selector server 110 then determines 222 a feature associated with the second transaction request message. The feature of the second transaction request message may be related to the 5G network 106. For instance, the feature may be related indicative of the security mechanisms for the 5G network 106, or be related to past network security threats and/or cyber-attacks conducted against the 5G network 106. The feature may be a rate of network security threats and/or cyber-attacks which have been carried out successfully by nefarious actors against the 5G network 106. Alternatively, or in addition, the feature may be related to the network traffic, or the network capability for performing a transaction of the 5G network 106. In some scenarios, the 5G network 106 may be deemed sufficiently safe, but not be available because of high network traffic and/or because of a lack of capability to perform a transaction effectively. In some scenarios, the 5G network 106 may be deemed safe, but not have the capability to perform a transaction within a certain period of time. In some arrangements the feature may be related to the point of sale device 102. For example, the feature may be indicative of a type of point of sale device 102 (an older model of point of sale device 102 may be at higher risk of cyber-attack), or indicative of the security mechanisms in place to protect the point of sale device 102, or it may be indicative of the type of networks which the point of sale device 102 can connect to. In some arrangements, the feature may be related to the transaction. For instance, the feature may be related to details of the transaction, incorporated in the second transaction request message 220, such as a recipient's details, or a sender's details, transaction amount, currency etc. In some arrangements, the feature may be related to more than one characteristic of the transaction and/or the network and/or other factors such as factors related to the point of sale device 102. The feature is preferably extracted from a header of the second transaction request message 220. However, any suitable means may be used to determine the feature of the 5G network 106.

Following the determination of the feature, the network selector server 110 calculates 224 a risk score associated with the second transaction request message 220 (hereafter called the second risk score). The second risk score is based on the second transaction request message 220. The network selector server 110 determines the second risk score based on the determined 222 feature of the second transaction message 220. The second risk score may be based on a feature related to the 5G network 106, or on a feature related to the transaction. In some arrangements, the second risk score may further be based on other parameters.

The network selector server 110 then determines 226 whether the second transaction request message 220 should be approved. Approval of the second transaction request message 220 means that the 5G network 106 is approved for processing the transaction contained in the second transaction request message 220 (i.e. the payment can be made via the point of sale device 102 over the 5G network 106). The network selector server 110 decides whether to approve the second transaction request message 220 based on the calculated 224 second risk score.

In some scenarios, at 226, the network selector server 110 may decide to not approve the second transaction request message 220. The disapproval of the second transaction message 220 means that the 5G network 106 is not approved for processing the transaction contained in the second transaction request message 220. The disapproval may be accompanied with a message (not shown) indicating that the second transaction request message 220 is not approved. The network selector server 110 may therefore send this message to the point of sale device 102, communicating that the second transaction request message 220 is not approved. The network selector server 110 may then select a network a further alternative to the 5G network 106, and instruct the point of sale device 102 to connect to said further alternative network. In some arrangements, the network selector server 110 may also instruct the point of sale device 102 to disconnect from the 5G network 106 that has been disapproved. The steps of method 200 may be iterated until the network selector server 110 approves a transaction request message sent from the point of sale device 102 over a final communication network (where its associated risk score meets the criteria that has been set for approval of a communication network). Alternatively, the steps of method 200 may be iterated for a predetermined number of attempts, and, if at the end of the last iteration, the network selector server 110 has not approved the last communication network selected, then the network selector server 110 will not proceed with the assessment of any further transaction request message from the point of sale device 102. In some instances, the network selector server 110 may send a message to the point of sale device 102, the message notifying the point of sale device 102 that no further transaction request message will be assessed by the network selector server 110.

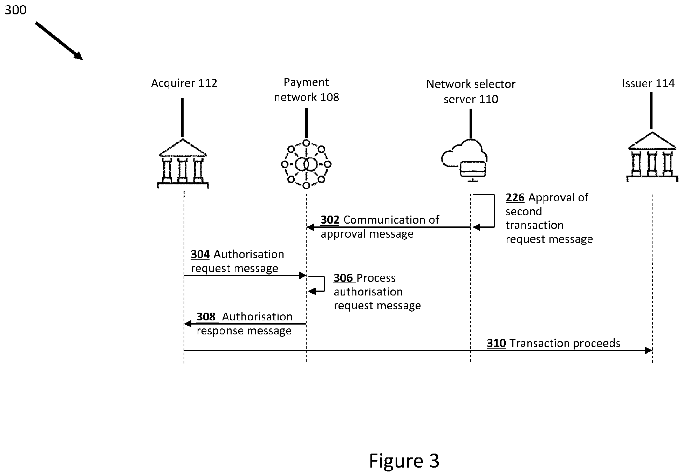

Figure 3 shows a method 300 following on from the method 200 illustrated in Figure 2, when providing authorisation to proceed with a payment transactions at a point of sale device 102.

Method 300 starts after step 226 of method 200, illustrated in Figure 2, and as described above. The network selector server 110 approves 226 the second transaction request message, sent over the 5G network 106. After this approval 226, the network selector server 110 sends, to the payment network 108, a communication message 302 of the approval 226 of the second transaction request message, said approval comprising an indication that the second transaction request message 220 has been approved, i.e. that the point of sale device 102 is connected to an approved communication network and is approved to proceed with the payment over that communication network by the network selector server 110.

The method then continues where the acquirer 112 issues an authorisation request message 304 to the payment network 108. The authorisation request message 304 comprises a request to authorise the transaction. The authorisation request message is generated by the acquirer 112. The authorisation request message is independent from the second transaction request message 220.

The authorisation request message 304 is then processed 306 at the payment network 108 via a typical payment authorisation process, such as to determine the validity of the card (or payment instrument) and the availability of funds. The payment network 108 sends an authorisation response message 308 to the acquirer 112, based on said processing 306, as either a positive (authorised) or negative (not authorised) response. However, a positive authorisation response message 308, is only sent if the communication of approval message 302, outlined above, has been received at the payment network 108. Otherwise, a response 308 to the authorisation request message 304 may not be sent until after message 302 is received, or alternatively a negative authorisation request message 304 may be sent by default.

Once a positive authorisation response message 308 is sent, the transaction then proceeds 310 with messages sent between the issuer and acquirer in a conventional mechanism for payment transactions as known in the art (such as via a typical 4 party transaction). The transaction proceeds if the network selector server 110 has approved the second transaction request message 226 and if the payment network 108 has authorised the transaction 308, as outlined above. When the transaction proceeds, funds are exchanged between the acquirer 112 and the issuer 114.

In this arrangement, the payment network 108 provides a positive authorisation request only after every step of method 200 is completed, and in particular, after step 226. In this way, before processing an authorisation request message 304 from the acquirer 112, the network selector server 110 will have instructed the point of sale device 102 to swap from a Wi-Fi network 104 to a more secure 5G network 106, and will have assessed the 5G network 106 and approved the second transaction request message. In some arrangements, the transmission of an authorisation request message 304 is triggered by the payment network 108 communicating the approval of the second transaction request message at 302. In this way, only the transactions included in approved transaction request messages sent over a secure and available network are processed at steps 304 to 308.

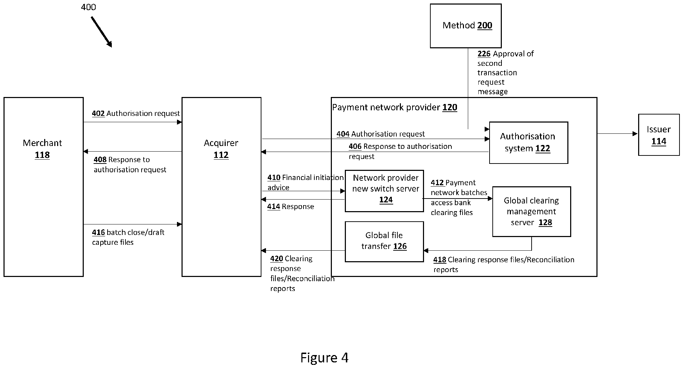

Figure 4 shows a schematic block diagram of a method 400 for authorising, at a payment network provider 120, a payment transaction, providing, at a network selector server 110, a secure network 106 for processing said payment transactions, and for providing, at the payment network provider 120, clearing and settlement of the payment transaction.

At step 402, a merchant 118 sends an authorisation request to an acquirer 112. The authorisation request may be generated by the merchant 118. At step 404, an authorisation request is sent from the acquirer 112 to the authorisation system 122 of the payment network provider 120. The authorisation request of step 402 may be the same authorisation request message of step 404, or a different one. The acquirer 112 may be a bank associated with the merchant 118 with which the merchant 118 may have a bank account. The authorisation system 122 is a payment network 108 of the payment network provider 120, or comprises the payment network 108. At step 406, a response to the authorisation request is sent back to the acquirer 112, and then from the acquirer 112 to the merchant 118. At step 226 (which is, for example, message/step 226 of method 200 illustrated in Figure 2 and described above) the network selector server 110 approves the second transaction request message, which is sent from the point of sale device 102 to the network selector server 110 over the 5G network 106. The approval of the second transaction request message is sent to the authorisation system 122 before the authorisation request is sent, at step 404, from the acquirer 112 to the authorisation system 122.

The online clearing phase comprises a series of steps, through which the transaction is verified and further risk checks may be made to ensure the validity of the transaction. Provided that the online clearing phase of the transaction results in the transaction being validated, a settlement phase of the transaction occurs. The settlement phase is the phase where the transaction is finalised, and funds are exchanged between the acquirer 112 and the issuer 114.

The online clearing and settlement phases occur at steps 410 to 420. At step 416, the merchant 118 closes a batch list (i.e., a list of payments that need to be processed at a certain point in time by the payment network provider 120), wherein the batch list includes the payment associated with the transaction, and other payments associated with other transactions involving the acquirer 112. At step 416, the merchant 118 further sends a draft capture (i.e., recorded authorisation of the payment) to the acquirer 112. At step 410, for every transaction in the merchant batch file, the acquirer 112 sends, to the network provider new switch server 124 of the payment network provider 120, financial initiation advice messages, which contain financial details which link the transaction with the acquirer 112 and the issuer 114. At step 414, the network provider new switch server 124 of the payment network provider 120, acknowledges the advice messages sent at step 410. At step 412, the network provider new switch server 124 of the payment network provider 120 creates a clearing batch list, the clearing batch list including all the transactions which have been approved for clearing, and clears all the transactions within the clearing batch list. Batch lists are used so that payments are processed and cleared at predetermined times. The clearing batch list is sent to a global clearing management server 128 of the payment network provider 120.

At step 418, the global clearing management server 128 sends clearing response files and a reconciliation report to a global file transfer system 126 of the payment network provider 120, which sends said clearing response files and said reconciliation report to the acquirer 112. The clearing response files contain information regarding the outcome of the clearing process (e.g., if a transaction has been cleared and when). The reconciliation report summarises all the financial activities to and from the acquirer 112.

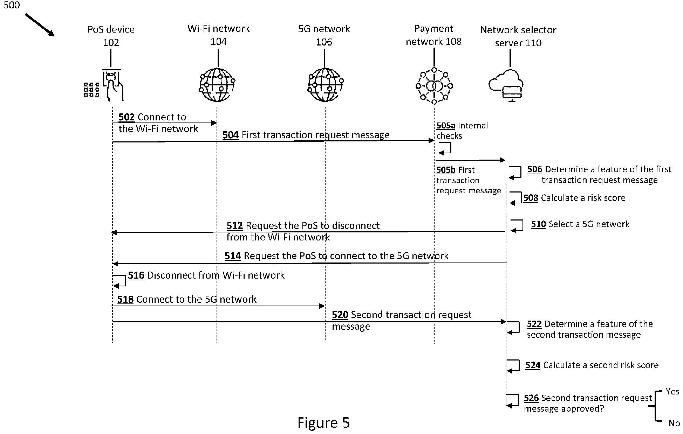

Figure 5 is an alternative message flow diagram showing a method 500 for processing payment transactions at a point of sale device 102 using the system of Figure 1.

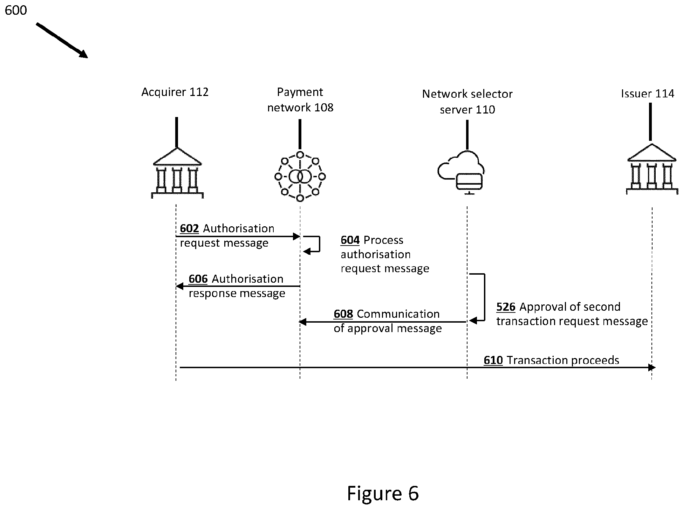

Initially the point of sale device 102 connects 502 to the Wi-Fi network 104 - this may be at the time of the transaction (i.e. when the user is intending to make a payment using the point of sale device, or at an early point in time). The connection to the Wi-Fi network 104 is through conventional procedures known in the art that are not described here. The point of sale device 102 then sends, to the payment network 108, over the Wi-Fi network 104, the first transaction request message 504 - as outlined for message 204 in Figure 2 described above. The payment network 108 then conducts internal checks 505a to verify whether any additional verification and/or authorisation processes, concerning the payment transaction, have been carried out at the payment network 108. For example, with reference to Figure 6 below, the internal check 505a may be a check of whether an authorisation response message has been issued, before first transaction request message 504 is received, from the payment network 108 to an acquirer 112 (see, for example, Figure 6 below, and in particular 602 to 606), in response to an authorisation request message 602, sent by an acquirer 112 to the payment network 108.

The payment network 108 then send the first transaction request message 505b to the network selector server 110. In some examples, the payment network 108 may send the transaction request message 505b to the network selector server 110 if and only if, during the internal checks 505a, the payment network 108 determines that an authorisation request message from the acquirer has been approved (before the internal checks 505a) by the payment network 108. In this way, the resources of the network selector server 110 may be utilised only for transactions which have been authorised by the payment network 108. This may avoid or minimise waste of computational resources. Steps 506 to 526 are the same as steps 206 to 226 described for method 200, illustrated in Figure 2.

Figure 6 shows a schematic message flow diagram of a method 600 showing further details of the message flow of the method 500 in Figure 5, when providing authorisation to proceed with a payment transactions at a point of sale device 102. In this arrangement, a network selector server 110 approves 526 the second transaction request message 520, only after the payment network 108 has authorised the payment transaction (i.e., once 602 to 606 have occurred).

In this scenario, the payment network 108 checks, during the internal checks 505a, that the authorisation response 606 has been sent, before sending the first payment request message 505b to the network selector server 110. As can be seen in Figure 6 the acquirer 112 issues an authorisation request message 602 to the payment network 108. The authorisation request message 602 comprises a request to authorise the transaction. The authorisation request message 602 be generated at the acquirer 112. The payment network 108 then processes 604 the authorisation request message, in other words, determines whether to authorise the transaction based on the authorisation request message (this is via a typical payment authorisation process, such as to determine the validity of the card (or payment instrument) and the availability of funds). The payment network 108 then issues an authorisation response message 606 to the acquirer 112 based on said processing 604. The authorisation response message 606 may comprise either a positive (authorised) or negative (not authorised) response.

The network selector server 110 then approves 526 the second transaction request message 520, sent over the 5G network 106 (as per the method 500 shown in Figure 5, the other method steps of Figure 5 are not shown for simplicity). A communication of approval message 608 is then sent from the network selector server 110 to the payment network 108, which may then be sent to the acquirer (not shown). The transaction then proceeds 610, meaning that funds are transferred from the acquirer 112 to the issuer 114. This may occur if and only if the authorisation response message 606 contains an authorisation of the transaction. Action 526 occurs after authorisation response message 606, i.e., method 500 is completed (with the execution of action 526) after the payment network 108 has processed the authorisation request message sent from the acquirer 112. After 526, the network selector server 110 sends communication of approval 608 of the second transaction request message to the payment network 108. In some arrangements, the network selector server 110 may not start an assessment of the second transaction request message (e.g., the first step of method 500), unless the payment network 108 issues an authorisation response 602. In this way, fewer computational resources may be utilised when the transaction is not authorised by the payment network 108. In some arrangements, the network selector server 110 may carry out an assessment of the second transaction request message, regardless of the outcome of the authorisation process 604. The assessment may be useful, even in circumstances where the transaction has not been authorised. For instance, the assessment may result in a second risk score that may be stored in a memory, and retrieved by the network selector server 110 for the analysis of future transaction request messages.

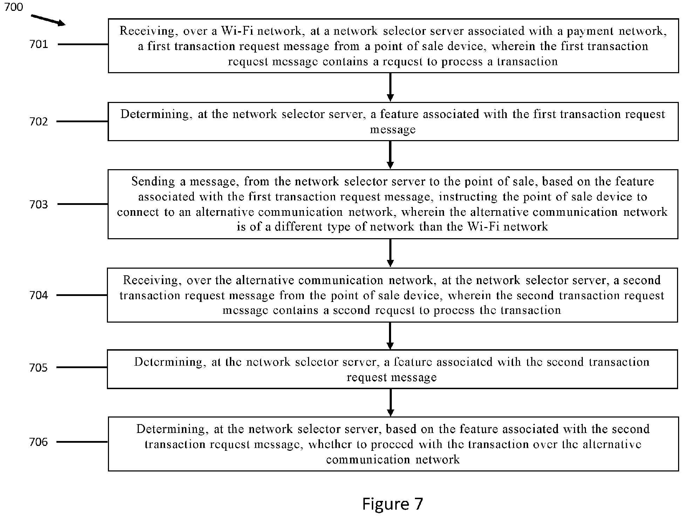

Figure 7 shows a flow diagram of a computer-implemented method 700 for providing a secure network for processing payment transactions, performed by a network selector server 110.

At step 701, a first transaction request message is received at a network selector server 110, from a point of sale device 102, over a Wi-Fi network 104. The first transaction request message contains a request to process a transaction.

At step 702, a feature associated with the first transaction request message is determined at the network selector server 110.

At step 703, a request message is sent, from the network selector server 110 to the point of sale device 102, instructing the point of sale device 102 to connect to an alternative communication network 106. The request message is based on the feature associated with the first transaction request message. The alternative communication network 106 is of a different type of network than the Wi-Fi network 104.

At step 704, a second transaction request message is received at the network selector server 110, from the point of sale device 102, over the alternative communication network 106. The second transaction request message contains a request to process the transaction.

At step 705, a feature associated with the alternative communication network 106 is determined at the network selector server 110.

At step 706, it is determined, at the network selector server 110, whether to proceed with the transaction over the alternative communication network 106. The decision is based on the feature associated with the second transaction request message.

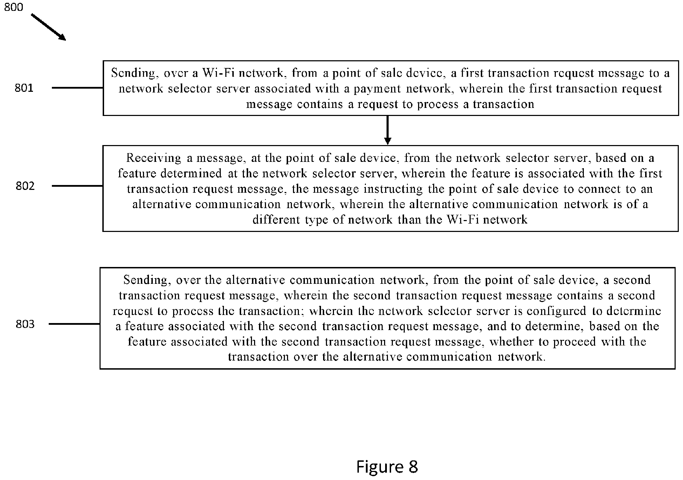

Figure 8 shows an example computer-implemented method 800 for providing a secure network for processing payment transactions, performed by a point of sale device 102.

At step 801, a first transaction request message is sent, from a point of sale device 102, to a network selector server 110 over a Wi-Fi network 104, wherein the first transaction request message contains a request to process a transaction.

At step 802, a message is received at the point of sale device 102, from the network selector server 110. The message is based on a feature determined at the network selector server 110, wherein the feature is associated with the first transaction request message, the message instructing the point of sale device 102 device to connect to an alternative communication network 106, wherein the alternative communication network 106 is of a different type of network than the Wi-Fi network 104.

At step 803, a second transaction request message is sent from the point of sale device 102 to the network selector server 110, over the alternative communication network 106. The second transaction request message contains a second request to process the transaction, and the network selector server 110 is configured to determine a feature associated with the second transaction request message, and to determine, based on the feature associated with the second transaction request message, whether to proceed with the transaction over the alternative communication network 106.

It will be appreciated that any of the methods described herein, and any step of the methods, can be implemented by a computer. Such implementation may take the form of a processor executing instructions stored on a non-transitory computer-readable medium or media, wherein when executed the instructions cause the processor to perform any one or more steps of any of the methods described herein. Individual steps of any method may be implemented by different processors that are all collectively acting in accordance with computer-readable instructions stored on one or more storage media. The processor(s) may be component(s) of system, for example a processor of a device.

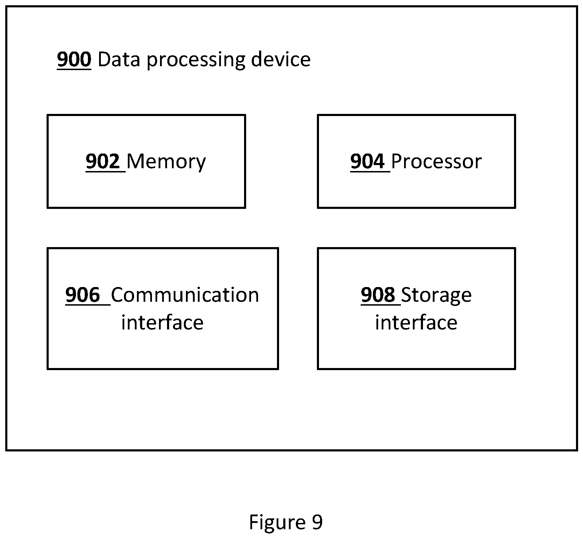

Similarly, any steps of any of the methods described herein may be performed by data processing devices. By way of example, Figure 9 shows in schematic form a data processing device 900 that is suitable for performing the functions of the network selector server 110, and/or the point of sale device 102, and/or any of the payment network 108, a server of the Wi-Fi network 104 and a server of the alternative communication network 106. The data processing device 900 may automatically perform any of the methods described herein.

Data processing device 900 includes a processor 904 for executing instructions. Instructions may be stored in a memory 902. Processor 904 may include one or more processing units (e.g., in a multi-core configuration) for executing instructions. The instructions may be executed within a variety of different operating systems on the data processing device 900, such as UNIX, LINUX, Microsoft Windows®, etc. More specifically, the instructions may cause various data manipulations on data stored in memory 902 (e.g., create, read, update, and delete procedures). It should also be appreciated that upon initiation of a computer-implemented method, various instructions may be executed during initialization. Some operations may be required to perform one or more methods described herein, while other operations may be more general and/or specific to a particular programming language (e.g., C, C#, C++, Java, or other suitable programming languages, etc.).

Processor 904 is operatively coupled to a communication interface 906 such that data processing device 900 can communicate with a remote device, such as another data processing device of the system. For example, communication interface 906 may receive communications from another member of the system.

Processor 904 may also be communicatively coupled to a storage device such as a database, depending on the function of data processing device 900 within the context of the system. The storage device is any computer-operated hardware suitable for storing and/or retrieving data, where in the case of a secure storage medium the data is stored and retrieved securely.

The storage database may be external to data processing device 900 and located remotely. Alternatively, it can be integrated in data processing device 900. For example, data processing device 900 may include memory 902 as one or more hard disk drives acting as a storage database. Alternatively, where the storage database is external to data processing device 900, it can comprise multiple storage units such as hard disks or solid-state disks in a redundant array of inexpensive disks (RAID) configuration. The storage database may include a storage area network (SAN) and/or a network attached storage (NAS) system.

Processor 904 can be operatively coupled to the storage device (storage database) via a storage interface 908. Storage interface 908 is any component capable of providing processor 904 with access to the storage device. Storage interface 908 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 904 with access to the storage device 908.

Memory 902 may include, but is not limited to, RAM such as dynamic RAM (DRAM) or static RAM (SRAM), ROM, erasable programmable read-only memory (EPROM), electrically erasable programmable read-only memory (EEPROM), and non-volatile RAM (NVRAM). The above memory types are exemplary only and are not limiting as to the types of memory usable for storage of a computer program.

As used herein, the term "non-transitory computer-readable media" is intended to be representative of any tangible computer-based device implemented in any method or technology for short-term and long-term storage of information, such as, computer-readable instructions, data structures, program modules and sub-modules, or other data in any device. The methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Furthermore, as used herein, the term "non-transitory computer-readable media" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

Any suitable means may be used to determine the first and/or second risk score. The risk score (either the first risk score or the second risk score, or both) may be calculated with a formula, which takes one or more features as inputs, and performs arithmetic and/or statistical operations on the one or more features. An example of a formula for calculating the risk score ("RS") is the following:

$$RS = (X_{NSP} + X_{NTV} + X_{NSM} + X_{TON}) * X_{RET}$$

In this example, $X_{NSP}$, $X_{NTV}$, $X_{NSM}$, $X_{TON}$ and $X_{RET}$ are features of either the first or the second transaction request message. Typically, each of these features can be extracted by a header of the transaction request message.

The acronym NSP stands for "Network Service Provider". The feature $X_{NSP}$ is a score (e.g., a number between a minimum and a maximum threshold) which rates the quality of a network service provider (such as a payment network provider). For example, if a service provider SP1 has had fewer eavesdropping incidents (or other cyber-attacks) reported in the past year with respect to a service provider SP2, then, $X_{NSP\ SP1} < X_{NSP\ SP2}$. In another example, $X_{NSP}$ may score the availability of the network, or the timeliness through which transaction request messages are processed. For example, $X_{NSP}$ may be related to the rate of failed transactions over any payment network belonging to the payment network provider. For example, if the service provider SP1 has had fewer failed transactions with respect to service provider SP2, then, $X_{NSP\ SP1} < X_{NSP\ SP2}$.

The acronym NTV stands for "Network Threat Validation". $X_{NTV}$ of a network is a feature indicative of a likelihood of eavesdropping of a message sent over the network, based on the number of security threats (e.g., threats of eavesdropping) occurred against that particular network over a certain period of time. In some examples, $X_{NTV}$ is a number which is directly proportional to the number of security threats occurred against the network within a certain period of time.

The acronym NSM stands for "Network Security Mechanism". $X_{NSM}$ of a network is a feature which rates the quality of the one or more security mechanisms set up in place for that network. For example, if a network has numerous and regular software updates to improve security, the network score $X_{NSM}$ will be lower than for a network whose software has never been updated. In some instances, $X_{NSM}$ is indicative of the presence of encryption mechanisms, and the type of encryption mechanisms for the network.

The acronym TON stands for "Type of Network". $X_{TON}$ is therefore a score associated with the type of network. For example, a 5G network will have a $X_{TON}$ = 1, an Ethernet network will have a $X_{TON}$ = 3, and a Wi-Fi network will have a $X_{TON}$ = 5. The higher the value of $X_{TON}$, the worse the network quality, which takes into account security and availability.

The acronym RET stands for "Region and Level of Cyber-Threat". $X_{RET}$ is therefore a score associated with the likelihood of attack against the network. This parameter may be either based on a feature of the network, or on a feature of the transaction, or a combination of features of the network and of the transaction.

The risk score formula above is intended to be only an example. For instance, the risk score may be based on different operations between the features above. In some scenarios, the risk score may be based on one or more of the features of the formula outlined above. The risk score formula may be a pre-determined formula, which performs set operations on one or more features and other parameters associated with the second transaction request message. Determining the risk score may comprise using artificial intelligence (AI). The risk score may also be calculated based on a prediction model based on historical transaction data from one or more point of sale devices and/or different merchants.

Although it has been shown in Figures 1 to 6 that a point of sale device 102 is connected to the Wi-Fi network 104, in other arrangements, a plurality of point of sale devices may be connected to the Wi-Fi network 104 and/or the alternative communication network 106 of Figure 1. In some arrangements, the network selector server 110 may be configured to receive transaction request messages from a plurality of point of sale devices. According to some arrangements, the network selector server 110 may determine more than one feature of the Wi-Fi network 104 and/or the alternative communication network 106.

According to some arrangements, the feature associated with the first transaction request may also be indicative of the type of networks which the point of sale device 102 can connect to. This may be useful, for example, if the point of sale device 102 is not configured to connect to a particular type of alternative communication network 106, such as a 5G network slice of a 5G network. In some arrangements alternative to the arrangement of Figure 2 and 5, the alternative communication network 106 selected at step 210 is a 4G network, or a 5G network slice of a 5G network. The network selector server 110 may select 210 a particular type of alternative communication network 106 (e.g., a 4G network or a 5G network, or a 5G network slice of a 5G network) according to the feature (or features) of the first transaction request message determined 206 by the network selector server 110. In some arrangements, the type of alternative communication network 106 is selected 210 based on the calculated 208 risk score.

Although it has been shown in Figure 2 that the point of sale device 102 disconnects 216 from the Wi-Fi network 104, in alternative arrangements the point of sale device 102 remains connected to the Wi-Fi network 104 after receiving the message 214 requesting to connect to the 5G network 106, and after connecting 218 to the 5G network 106. In this way, the point of sale device 102 may perform functions, other than processing the transaction, over the Wi-Fi network 104, whilst processing the transaction over the alternative communication network 106. The advantage of this approach is that the connection to the Wi-Fi network 104 can still be used for other, less sensitive, tasks, whilst the second transaction request message 204 is assessed 222-224 at the network selector server 110. In some arrangements, different point of sale devices 102 are connected to the (same) network selector server 110, and said network selector server 110 may be trained to adopt different criteria when determining whether to swap each point of sale device 102 to an alternative communication network 106. For example, the network selector server 110 may determine, after determining 206 a feature of the first transaction request message or after calculating 208 a risk score based on the first transaction request message, that there is no need to request 214 the point of sale device 102 to connect to the alternative communication network (e.g., a 5G network) 106. The network selector server 110 may determine, based on the feature of the first transaction request message and/or on the first risk score, that the transaction can be performed at the point of sale device 102, over the Wi-Fi network 104 (in other words, the transaction can be performed at the point of sale device 102, when the point of sale device 102 is connected to the Wi-Fi network 104, and the transaction is processed by the payment network 108 by means of the Wi-Fi network 104). For instance, the network selector server 110 may produce a first risk score which indicates that the risk of eavesdropping during the transaction over the Wi-Fi network 104 is moderate, or low. Therefore, the network selector server 110 may determine, based on the first risk score, that there is no need to request the point of sale device 102 to connect to the alternative communication network 106 nor any other network.

In some arrangements, alternative to the method 300, if the network selector server 110 does not approve the second transaction request message, the payment network 108 may not process 306 an authorisation request message received from the acquirer 112, regardless of whether an authorisation request message is transmitted 304 to the payment network 108 from the acquirer 112. In this way, fewer steps are performed, if the second transaction request message is not authorised. In some arrangements, if the network selector server 110 rejects 226 the second transaction request message, the payment network 108 will process 306 the authorisation request message and will then issue, to the acquirer 112, a response communicating that the payment is not authorised.

Although it has been shown in Figure 5 that the payment network issues 505b the first transaction request message to the network selector server 110 only if during the internal checks 505a it is determined that the payment has been previously authorised by the payment network 108, in other arrangements, the payment network 108 may issue 505b the first transaction request message to the network selector server 110 independently on the outcome of the internal check 505a. In some arrangements, the network selector server 110 may conduct the assessment of the transaction request message in parallel to the payment network 108 processing the authorisation request message issued by the acquirer 112. In this way, two independent assessments of a transaction may be carried out in parallel, enhancing efficiency. Further, the assessment conducted by the network selector server 110 may be decoupled from the authorisation issued by the payment network 108, which has the advantage of increasing trust and enhancing reliability. Furthermore, if the network selector server 110 needs maintenance, it can be easily replaced by another network selector server 110, or temporarily isolated by the rest of the system 100, without affecting the payment process carried out by the payment network provider at the payment network 108. In other words, the network selector server 110 may be entirely agnostic to the transaction process.

As outlined with regard to the Figures 2 and 5, the 5G network (or alternative communication network) 106 may be selected based on the calculated 208, 508 risk score. Alternatively, the network selector server 110 may be programmed to change a criteria through which the 5G network 106 is selected. For instance, the network selector server 110 may be configured to change from a first criteria in which the 5G network 106 is selected based on the first risk score, to a second criteria in which the 5G network 106 is selected based on the determined 206, 506 feature. In this way, the network selector server 110 is capable of determining whether the first risk score is needed for the selection 210, 510 of the 5G network 106, or whether the calculated 206, 506 feature is sufficient.

As will be appreciated based on the specification herein, the above-described arrangements of the disclosure may be implemented using computer programming or engineering techniques including computer software, firmware, hardware or any combination or subset thereof. Any such resulting program, having computer-readable code means, may be embodied, or provided within one or more computer-readable media, thereby making a computer program product, i.e., an article of manufacture, according to the discussed arrangements of the disclosure. The article of manufacture containing the computer code may be made and/or used by executing the code directly from one medium, by copying the code from one medium to another medium, or by transmitting the code over a network.

While the disclosure has been described in terms of various arrangements, the person skilled in the art will recognise that the disclosure can be practiced with modification within the spirit and scope of the claims.

**Claims**

1. A computer-implemented method for providing a secure network for processing payment transactions, the method comprising:

   receiving over a Wi-Fi network, at a network selector server associated with a payment network, a first transaction request message from a point of sale device, wherein the first transaction request message contains a request to process a transaction;
   determining, at the network selector server, a feature associated with the first transaction request message;
   sending a message, from the network selector server, based on the feature associated with the first transaction request message, to the point of sale device, instructing the point of sale device to connect to an alternative communication network, wherein the alternative communication network is of a different type of network than the Wi-Fi network;
   receiving over the alternative communication network, at the network selector server, a second transaction request message from the point of sale device, wherein the second transaction request message contains a second request to process the transaction;
   determining, at the network selector server, a feature associated with the second transaction request message;
   determining, at the network selector server, whether to proceed with the transaction over the alternative communication network based on the feature associated with the second transaction request message.

2. The computer-implemented method of claim 1, further comprising the step of:

calculating, at the network selector server, a first risk score of the transaction, based on the feature of the first transaction request message; and/or
calculating, at the network selector server, a second risk score of the transaction, based on the feature of the second transaction request message.

3. The computer-implemented method of claim 2, wherein the step of sending the message instructing the point of sale device to connect to the alternative communication network is based on the first risk score; and/or wherein the step of determining, at the network selector server, whether to proceed with the transaction over the alternative communication network is based on the second risk score.

4. The computer-implemented method of claim 2 or 3, wherein the selection of the alternative communication network is based on the first risk score.

5. The computer-implemented method of any of claims 2 to 4, wherein the first risk score is based on one or more of: a feature of the Wi-Fi network, a feature of the transaction, and/or wherein the second risk score is based on one or more of: a feature of the alternative communication network, a feature of the transaction.

6. The computer-implemented method of any preceding claim, further comprising the step of:
approving, at the network selector server, based on the feature associated with the second transaction request message, the second transaction request message.

7. The computer-implemented method of any preceding claim, wherein the network selector server selects the alternative communication network to which the point of sale device is instructed to connect.

8. The computer-implemented method of any preceding claim, wherein the alternative communication network is one of a 4G network, a 5G network or a 5G network slice of a 5G network.

9. The computer-implemented method of any preceding claim, wherein a payment network provider associated with the payment network issues an authorisation response message to an acquirer, wherein the authorisation response message comprises an authorisation to process the transaction.

10. The computer-implemented method of any preceding claim, further comprising the step of sending, from the network selector server to the payment network, an approval message, based on the second risk score.

11. The computer-implemented method of any preceding claim, wherein the point of sale device connects to the alternative communication network, upon receiving the message instructing the point of sale device to connect to the alternative communication network.

12. The computer-implemented method of any preceding claim, wherein the message instructing the point of sale device to connect to the alternative communication network further instructs the point of sale device to disconnect from the Wi-Fi network.

13. A network selector server for providing a secure network for processing payment transactions, the network selector server being configured to perform the method of any of claims 1 to 12.

14. A non-transitory computer-readable medium comprising instructions which, when executed by a computer, cause the computer to carry out the method steps of any claim 1 to 12.

15. A computer-implemented method for providing a secure network for processing payment transactions, the method comprising:

sending, over a Wi-Fi network, from a point of sale device, a first transaction request message to a network selector server associated with a payment network, wherein the first transaction request message contains a request to process a transaction;
receiving a message, at the point of sale device, from the network selector server, based on a feature determined at the network selector server, wherein the feature is associated with the first transaction request message, the message instructing the point of sale device to connect to an alternative communication network, wherein the alternative communication network is of a different type of network than the Wi-Fi network;
sending, over the alternative communication network, from the point of sale device, a second transaction request message, wherein the second transaction request message contains a second request to process the transaction;
wherein the network selector server is configured to determine a feature associated with the second transaction request message, and to determine, based on the feature associated with the second transaction request message, whether to proceed with the transaction over the alternative communication network.

100

Figure 1

Figure 2

300

Acquirer 112          Payment          Network selector          Issuer 114
                   network 108          server 110

**226** Approval of
second
transaction
request message

**302** Communication of
approval message

**304** Authorisation
request message

**306** Process
authorisation
request message

**308** Authorisation
response message

**310** Transaction proceeds

Figure 3

400

Method **200**

**226** Approval of
second
transaction
request
message

Payment network provider **120**

Merchant
**118**

**402** Authorisation request

**408** Response to
authorisation request

**416** batch close/draft
capture files

Acquirer
**112**

**404** Authorisation request

**406** Response to authorisation
request

**410** Financial initiation
advice

**414** Response

**420** Clearing
response
files/Reconciliation
reports

Authorisation
system **122**

Network provider
new switch server
**124**

**412** Payment
network batches
access bank
clearing files

Global file
transfer **126**

Global clearing
management
server **128**

**418** Clearing response files/Reconciliation
reports

Issuer
**114**

Figure 4

500

| PoS device 102 | Wi-Fi network 104 | 5G network 106 | Payment network 108 | Network selector server 110 |

**502** Connect to the Wi-Fi network

**504** First transaction request message

**505a** Internal checks

**505b** First transaction request message

**506** Determine a feature of the first transaction request message

**508** Calculate a risk score

**510** Select a 5G network

**512** Request the PoS to disconnect from the Wi-Fi network

**514** Request the PoS to connect to the 5G network

**516** Disconnect from Wi-Fi network

**518** Connect to the 5G network

**520** Second transaction request message

**522** Determine a feature of the second transaction message

**524** Calculate a second risk score

**526** Second transaction request message approved? — Yes / No

Figure 5

600

Acquirer 112    Payment          Network selector    Issuer 114
                network 108      server 110

**602** Authorisation
request message
                **604** Process
                authorisation
                request message

**606** Authorisation
response message

                                                  **526** Approval of second
                **608** Communication             transaction request message
                of approval message

                        **610** Transaction proceeds

Figure 6

700

701 — Receiving, over a Wi-Fi network, at a network selector server associated with a payment network, a first transaction request message from a point of sale device, wherein the first transaction request message contains a request to process a transaction

702 — Determining, at the network selector server, a feature associated with the first transaction request message

703 — Sending a message, from the network selector server to the point of sale, based on the feature associated with the first transaction request message, instructing the point of sale device to connect to an alternative communication network, wherein the alternative communication network is of a different type of network than the Wi-Fi network

704 — Receiving, over the alternative communication network, at the network selector server, a second transaction request message from the point of sale device, wherein the second transaction request message contains a second request to process the transaction

705 — Determining, at the network selector server, a feature associated with the second transaction request message

706 — Determining, at the network selector server, based on the feature associated with the second transaction request message, whether to proceed with the transaction over the alternative communication network

Figure 7

800

801 — Sending, over a Wi-Fi network, from a point of sale device, a first transaction request message to a network selector server associated with a payment network, wherein the first transaction request message contains a request to process a transaction

802 — Receiving a message, at the point of sale device, from the network selector server, based on a feature determined at the network selector server, wherein the feature is associated with the first transaction request message, the message instructing the point of sale device to connect to an alternative communication network, wherein the alternative communication network is of a different type of network than the Wi-Fi network

803 — Sending, over the alternative communication network, from the point of sale device, a second transaction request message, wherein the second transaction request message contains a second request to process the transaction; wherein the network selector server is configured to determine a feature associated with the second transaction request message, and to determine, based on the feature associated with the second transaction request message, whether to proceed with the transaction over the alternative communication network.

Figure 8

**900** Data processing device

**902** Memory

**904** Processor

**906** Communication interface

**908** Storage interface

Figure 9

Europäisches
Patentamt
European
Patent Office
Office européen
des brevets

# EUROPEAN SEARCH REPORT

**Application Number**

EP 24 19 8922

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2017/046706 A1 (AGARWAL GAURAV [IN]) 16 February 2017 (2017-02-16) * paragraph [0012] - paragraph [0061]; figures 1-6 * ----- | 1-15 | INV. G06Q20/40 G06Q20/32 G06Q20/38 G06Q20/20 |
| Y | US 2006/268711 A1 (DORADLA ANIL K [US] ET AL) 30 November 2006 (2006-11-30) * paragraph [0011] - paragraph [0032]; figure 1 * ----- | 1-15 | H04W36/14 H04W36/16 H04W88/06 |
| A | US 2023/217254 A1 (SINGH SACHIN KUMAR [IN] ET AL) 6 July 2023 (2023-07-06) * paragraph [0017] - paragraph [0114]; figures 1-7 * ----- | 1-15 | |

**TECHNICAL FIELDS SEARCHED (IPC)**

G06Q

The present search report has been drawn up for all claims

| Place of search | Date of completion of the search | Examiner |
|---|---|---|
| The Hague | 20 February 2025 | Guenov, Mihail |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 19 8922

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2025

| Patent document cited in search report | Publication date | Patent family member(s) | Publication date |
|---|---|---|---|
| US 2017046706 A1 | 16-02-2017 | NONE | |
| US 2006268711 A1 | 30-11-2006 | NONE | |
| US 2023217254 A1 | 06-07-2023 | US 2023217254 A1 | 06-07-2023 |
| | | US 2024214821 A1 | 27-06-2024 |

EPO FORM P0459

For more details about this annex : see Official Journal of the European Patent Office, No. 12/82